# EUROPEAN PATENT APPLICATION

(11) **EP 4 837 765 A1**
(43) Date of publication of application: **11.11.2026**
(21) Application number: 25736136.0
(22) Date of filing: 02.01.2025
(51) Int. Cl.: B60K 35/22

(54) **VEHICLE-MOUNTED DISPLAY SYSTEM, DISPLAY CONTROL METHOD FOR VEHICLE-MOUNTED DISPLAY SCREEN, AND MOTOR VEHICLE**

(30) Priority: 02.01.2024 CN 202410009254
(71) Applicant: Boe Technology Group Co., Ltd., Beijing 100015 (CN); Beijing BOE Technology Development Co., Ltd., Daxing District Beijing 100176 (CN)
(72) Inventor: ZHAO, Junjie, Beijing 100176 (CN); YU, Jing, Beijing 100176 (CN); PAN, Qiannan, Beijing 100176 (CN); ZHAO, Hui, Beijing 100176 (CN); SU, Jing, Beijing 100176 (CN); CHEN, Shaobei, Beijing 100176 (CN); DONG, Xiaoqiao, Beijing 100176 (CN)
(74) Representative: Brötz, Helmut
(86) International application number: PCT/CN2025/070087
(87) International publication number: WO 2025/146071

(57) **Abstract**

Provided are a vehicle-mounted display system, a display control method for a vehicle-mounted display screen, and a motor vehicle. The vehicle-mounted display system may comprise: a vehicle-mounted display screen, which comprises a single screen divided into a driver display region and a non-driver display region, wherein the non-driver display region at least comprises a front-passenger display region; and a display control circuit, which is used for generating a first driving signal and a second driving signal for the driver display region and the non-driver display region, so as to respectively drive display operations of the driver display region and the non-driver display region, wherein the display control circuit is configured to control the display operation of the non-driver display region in a low-power-consumption mode when it is determined that there is no passenger on a front passenger seat after a motor vehicle is started.

## Description

This application claims priority from Chinese Patent Application No. 202410009254.3 filed on January 2, 2024 and titled "Vehicle-mounted Display System, Display Control Method for Vehicle-mounted Display Screen, and Motor Vehicle".

### TECHNICAL FIELD

The present disclosure relates to the field of display technology, and more specifically, to a display system for a motor vehicle, a display control method for a vehicle-mounted display screen, and a motor vehicle.

### BACKGROUND

In recent years, vehicles have gradually developed toward intelligence, and vehicles will gradually become intelligent mobile terminals integrating travel, office, entertainment, and leisure. As the core component of a display system, after intelligent vehicle-mounted screens, high-end, large-screen, multi-screen, and/or joint-screen have become the new trends of display screens in the vehicles.

As an important component of intelligent and high-end vehicles, a large vehicle-mounted display screen can carry enough information to meet display requirements. Compared with multi-connected screens or multi-screen independent displays, it has better display brightness and chromaticity uniformity. In recent years, many vehicle manufacturers have also laid out large-screen vehicle-mounted display technologies and solutions.

However, most existing technologies have the problems of excessive display power consumption of the vehicle-mounted display screen and excessive processing power consumption of the processor.

### SUMMARY

The vehicle-mounted display system, the display control method for the vehicle-mounted display screen, and the motor vehicle proposed by the embodiments of the present disclosure are used to solve the above-mentioned problems of the prior art.

According to an aspect of the present disclosure, a display system for a motor vehicle is provided, the display system comprising: a vehicle-mounted display screen including a single screen divided into a driver-seat display area and a non-driver-seat display area, wherein the non-driver-seat display area includes at least a front-passenger-seat display area; and a display control circuit for generating a first driving signal for the driver-seat display area and a second driving signal for the non-driver-seat display area to drive display operations of the driver-seat display area and the non-driver-seat display area respectively; wherein the display control circuit is configured to: when it is determined that a front-passenger seat of the motor vehicle is unoccupied after the motor vehicle is started, control, in a low-power-consumption mode, the display operation of the non-driver-seat display area.

According to an embodiment of the present disclosure, the display control circuit determines, after the motor vehicle is started, that the front-passenger seat is unoccupied when a duration for which the front-passenger seat has been unoccupied exceeds a preset threshold.

According to an embodiment of the present disclosure, for controlling the display operation of the non-driver-seat display area in a low-power-consumption mode, the display control circuit is configured to: prohibit the display operation of at least a portion of the non-driver-seat display area, or control at least a portion of the non-driver-seat display area to display low-power-consumption data.

According to an embodiment of the present disclosure, when prohibiting the display operation of at least a portion of the non-driver-seat display area, the display control circuit is configured to: in a case where the non-driver-seat display area includes only the front-passenger-seat display area, prohibit the display operation of the front-passenger-seat display area, and control the driver-seat display area to display corresponding display data or control the driver-seat display area to display display data corresponding to both the driver-seat display area and the front-passenger-seat display area; and in a case where the non-driver-seat display area includes the front-passenger-seat display area and a central control display area, prohibit the display operations of the central control display area and the front-passenger-seat display area, and control the driver-seat display area to display corresponding display data or control the driver-seat display area to display display data corresponding to the driver-seat display area and at least one of the central control display area and the front-passenger-seat display area; or prohibit the display operation of the front-passenger-seat display area, and control the central control display area and the driver-seat display area to display corresponding display data, or control the central control display area and the driver-seat display area to jointly display display data corresponding to the driver-seat display area.

According to an embodiment of the present disclosure, when controlling at least a portion of the non-driver-seat display area to display low-power-consumption data, the display control circuit is configured to: in a case where the non-driver-seat display area includes only the front-passenger-seat display area, control the front-passenger-seat display area to display the low-power-consumption data, and control the driver-seat display area to display corresponding display data or control the driver-seat display area to display display data corresponding to both the driver-seat display area and the front-passenger-seat display area; and in a case where the non-driver-seat display area includes a front-passenger-seat display area and a central control display area, control the central control display area and the front-passenger-seat display area to display the low-power-consumption data, and control the driver-seat display area to display corresponding display data or control the driver-seat display area to display display data corresponding to the driver-seat display area and at least one of the central control display area and the front-passenger-seat display area; or control the front-passenger-seat display area to display the low-power-consumption data, and control the driver-seat display area and the central control display area to display corresponding display data or control the central control display area and the driver-seat display area to jointly display display data corresponding to the driver-seat display area.

According to an embodiment of the present disclosure, the display control circuit is further configured to: when determining that the front-passenger seat becomes occupied while in a state where the front-passenger seat is unoccupied, switch to control the display operation of the non-driver-seat display area in a normal mode.

According to another aspect of the present disclosure, a display control method for a vehicle-mounted display screen is also provided, the vehicle-mounted display screen including a driver-seat display area and a non-driver-seat display area, and the non-driver-seat display area including at least a front-passenger-seat display area, the method comprising: determining, after the motor vehicle is started, whether the front-passenger seat is occupied; and when it is determined that the front-passenger seat is unoccupied, controlling a display operation of the non-driver-seat display area in a low-power-consumption mode, wherein the display operations of the driver-seat display area and the non-driver-seat display area are separately driven by a first driving signal and a second driving signal.

According to another aspect of the present disclosure, a motor vehicle is provided, which includes the display system as described above.

In this application, when the processor system (such as a system-on-chip) determines to control the non-driver-seat display area in a low-power-consumption mode based on the detection result of whether the front-passenger seat is occupied, it can realize display operation control of each display area on the vehicle-mounted display screen by running a virtual machine to support multiple operating systems. In this way, using a combination of software and hardware, when the front-passenger seat changes from unoccupied to occupied, the display corresponding to the front-passenger seat can be started and/or the virtual operating system corresponding to the front-passenger seat can be started; when the front-passenger seat changes from occupied to unoccupied, the display corresponding to the front-passenger seat is turned off and/or the virtual operating system corresponding to the front-passenger seat is stopped. Thus, display power consumption and/or processor power consumption can be reduced, and user experience can be improved.

### BRIEF DESCRIPTION OF DRAWINGS

The accompanying drawings are presented to aid in the description of various aspects of the disclosure and are provided solely for illustration and not limitation of the aspects.
FIG. 1 shows a schematic diagram of a vehicle-mounted display screen in a motor vehicle according to an embodiment of the present disclosure.
FIG. 2 shows a schematic structural diagram of a display system in a motor vehicle according to an embodiment of the present disclosure.
FIGS. 3A-3E show schematic diagrams of displays on the vehicle-mounted display screen when the display control circuit controls the non-driver-seat display area in a low-power-consumption mode.
FIGS. 4A-4D show schematic diagrams of the system structure when the display control circuit includes a single timing controller and schematic diagrams of the system operation for controlling the non-driver-seat display area in a low-power-consumption mode.
FIGS. 5A-5F show schematic diagrams of the system structure when the display control circuit includes two timing controllers (first and second timing controllers) and schematic diagrams of the system operation for controlling the non-driver-seat display area in a low-power-consumption mode.
FIGS. 6A-6B show schematic diagrams of the system structure when the display control circuit includes three timing controllers and schematic diagrams of the system operation for controlling the non-driver-seat display area in a low-power-consumption mode.
FIG. 7 shows a schematic flowchart of a display control method for a vehicle-mounted display screen according to an embodiment of the present disclosure.

### DETAILED DESCRIPTION

The technical solutions in the embodiments of the present disclosure will be clearly and completely described below with reference to the drawings in the embodiments of the present disclosure. Obviously, the described embodiments are only some of the embodiments of the present disclosure, not all of the embodiments. Based on the embodiments in this application, all other embodiments obtained by those of ordinary skill in the art without creative efforts shall fall within the scope of protection of this application.

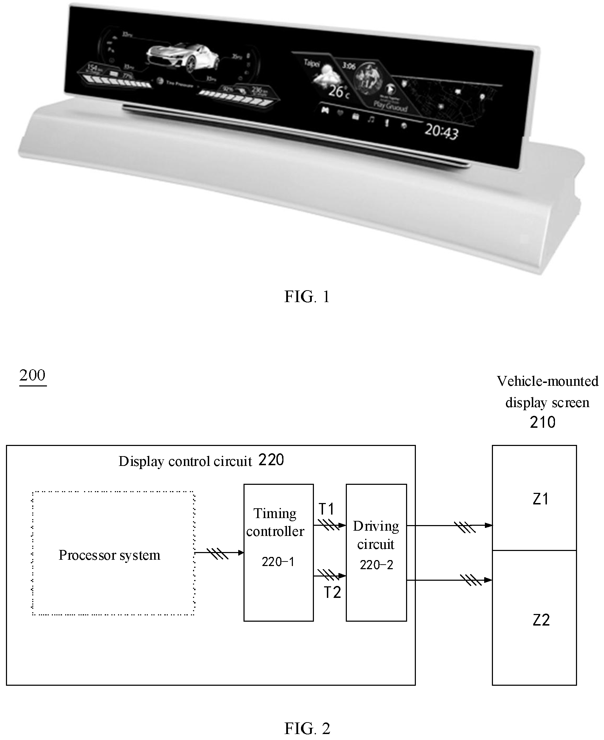

FIG. 1 shows a schematic diagram of a vehicle-mounted display screen in a motor vehicle according to an embodiment of the present disclosure.

As shown in FIG. 1, the vehicle-mounted display screen has a single screen, and it can span the driver side and the front-passenger side of the motor vehicle, so that both the driver and the passenger on the front-seat side can obtain information from the vehicle-mounted display screen, and optionally interact with it.

The display area on the vehicle-mounted display screen can be divided into multiple display areas, and the sizes of the multiple display areas can be the same or different, so that appropriate content can be displayed in different display areas according to different requirements. For example, the display area corresponding to the driver's seat on the vehicle-mounted display screen (hereinafter referred to as the driver-seat display area) can display the vehicle's basic information and instrument information such as driving data, thereby providing an intuitive reference for the driver's driving behavior; the display area adjacent to the driver-seat display area (hereinafter collectively referred to as the non-driver-seat display area) can display navigation information and can also realize some in-vehicle entertainment functions, such as video playback, music playback, and radio functions. Optionally, the non-driver-seat display area may include a central control display area and a front-passenger-seat display area, or may also include other display areas, or may include only the front-passenger-seat display area, which can be designed according to actual requirements.

Normally, in current designs, both the driver-seat display area and the non-driver-seat display area are displayed simultaneously, that is, the display control circuit of the vehicle-mounted display screen controls the display screen to maintain display. However, the inventors of the present disclosure noticed that when the front-passenger seat is unoccupied, the display of the front-passenger-seat display area becomes less necessary, and the driver may not pay much attention to the display content of the central control display area while driving. Therefore, in order to reduce display power consumption, it can be considered to dynamically control the display of the front-passenger-seat display area and/or the central control display area according to the occupancy status of the front-passenger seat. For example, when the front-passenger seat changes from unoccupied to occupied, the display operation corresponding to the front-passenger-seat display area may be started; and when the front-passenger seat changes from occupied to unoccupied, the display operation corresponding to the front-passenger-seat display area can be turned off.

In addition, in order to better realize partitioned control of the display operation of the vehicle-mounted display screen, the embodiments of the present disclosure also consider using multiple operating systems to control different display areas. For example, the driver-seat display area needs to remain displayed at all times, so a different operating system (for example, an operating system with higher reliability and stability) from that for the non-driver-seat display area can be used to control the display operation.

FIG. 2 shows a schematic structural diagram of a display system in a motor vehicle according to an embodiment of the present disclosure.

As shown in FIG. 2, the display system 200 includes a vehicle-mounted display screen 210 and a display control circuit 220. The vehicle-mounted display screen may be a vehicle-mounted display screen as shown in FIG. 1, which includes a single screen divided into a driver-seat display area Z1 and a non-driver-seat display area Z2, and the non-driver-seat display area includes at least a front-passenger-seat display area.

The display control circuit 220 may include various circuit components for driving the display panel of the display screen, and at least a part thereof may be integrated with the display panel into a module. The display control circuit 220 may be used to generate a first driving signal for the driver-seat display area on the vehicle-mounted display screen and a second driving signal for the non-driver-seat display area on the vehicle-mounted display screen to drive the display operations of the driver-seat display area and the non-driver-seat display area respectively.

It should be noted that each of the first driving signal and the second driving signal here is actually a set of signals, such as row driving signals and column driving signals for rows and columns of pixels of the display panel, etc.

As mentioned above, in order to reduce the display power consumption, the display control circuit may be configured to: when it is determined that the front-passenger seat is unoccupied after the motor vehicle is started, control the display operation of the non-driver-seat display area in a low-power-consumption mode. For example, the display control circuit may obtain sensor signals from sensors (e.g., image sensors, gravity sensors, etc.) and determine whether the front-passenger seat is occupied based on the sensor signals. Optionally, the display control circuit may determine, after the motor vehicle is started, that the front-passenger seat is unoccupied only when the duration for which the front-passenger seat has been unoccupied exceeds a preset threshold, so as to improve detection accuracy and avoid frequent operations on the vehicle-mounted display screen caused by a front passenger temporarily getting off and then immediately getting back on.

In addition, the display control circuit is further configured to: when it is determined, in a state where the front-passenger seat is unoccupied, that the front-passenger seat becomes occupied, switch to control the display operation of the non-driver-seat display area in a normal mode.

Further, the display control circuit may optionally include a timing controller 220-1 and a driving circuit 220-2. For example, the timing controller may generate a first timing signal T1 and a second timing signal T2, and the driving circuit 220-2 may drive the display operations of the driver-seat display area and the non-driver-seat display area respectively based on the first timing signal and the second timing signal.

It should be noted that each of the first timing signal T1 and the second timing signal T2 here is actually a set of signals for providing to the driving circuit, such as various start signals, various clock signals and/or reset signals, etc.

Optionally, the timing controller may obtain a standard image signal or video signal (including multiple image frames), i.e., a data signal, from the outside, and convert the standard image signal or video signal into specific timing signals required by the display panel (forming the vehicle-mounted display screen) for row and column driving, and send them to the driving circuit, so that the driving circuit can generate driving signals to display respective display data on the vehicle-mounted display screen.

The driving circuit 220-2 may include a source driving circuit and a gate driving circuit or the like of the vehicle-mounted display screen, to generate the first driving signal based on the first timing signal T1 to drive the display operation of the driver-seat display area, and to generate the second driving signal based on the second timing signal T2 to drive the display operation of the non-driver-seat display area.

Optionally, the driving circuit includes one or more driver chips, each driver chip corresponding to a display operation of at least a portion of the driver-seat display area or the non-driver-seat display area. For example, the first and second driver chips are used to drive the display operation of the driver-seat display area, and the third and fourth driver chips are used to drive the display operation of the non-driver-seat display area. When it is necessary to turn off the display operation of a certain display area, the driver chip corresponding to that display area can stop working, or the timing controller can be prohibited from providing timing signals to that driver chip.

As mentioned above, the partitioned display of the vehicle-mounted display screen can be controlled through multiple operating systems to provide reliability of display control and avoid mutual interference between displays in different display areas. For example, to realize multi-operating system control, the display system of the vehicle-mounted display screen may include a processor system (e.g., a system-on-chip (SOC)) for overall control, which may be integrated with the timing controller and driving circuit as part of the display control circuit or may be provided separately from the display control circuit. For example, taking the processor system as an SOC, after the vehicle is started, the SOC executes a computer program (which can be stored in various forms) to run a first operating system (e.g., a server system such as QNX). At this time, the first operating system may trigger the display operation of the driver-seat display area, or may trigger the display operation of the entire display area of the vehicle-mounted display screen, or may only start preparation operations for display without controlling any display area. Then, the first operating system may run a virtual machine (QNX virtual machine), and one virtual operating system (e.g., Android system) runs over the virtual machine, which may correspond to the non-driver-seat display area (at least the front-passenger-seat display area). In this way, the display operation of the driver-seat display area can be implemented based on display-control related signals (e.g., data signals and timing control signals) for display data output by the first operating system to the timing controller, and the display operation of the non-driver-seat display area can be implemented based on display-control related signals for display data output by the second operating system to the timing controller. Alternatively, two or more virtual operating systems may be run on the virtual machine, such as a Linux system and an Android system, where the Linux system is used for the driver-seat display area and the Android system is used for the non-driver-seat display area; or the Linux system is used for the driver-seat display area, a first Android system is used for the central control display area, and a second Android system is used for the front-passenger-seat display area.

For example, the timing controller may obtain display-control related signals from a virtual operating system (e.g., Linux system or Android system), such as data signals and timing control signals (e.g., at least part of clock signals, synchronization signals, enable signals, etc.), in signal formats such as eDP or LVDS, for display data to be displayed (e.g., video image data in normal display) or for low-power-consumption data in a low-power-consumption mode (as described below) and use these to generate the above-mentioned first timing signal and second timing signal.

In addition, when the horizontal resolution of the vehicle-mounted display screen is high (e.g., 10K resolution), one timing controller (e.g., in the form of an integrated chip) may not meet the requirements, so two or more timing controllers may be used. In this case, switches are provided between the timing controllers, and the processor system controls the switching of these switches to realize cascading of the timing controllers, so as to unify the driving timing of each display area during full-screen normal display.

The vehicle-mounted display screen may be a liquid crystal display (LCD), an organic light-emitting diode (OLED) display, a miniLED display, or a microLED display, etc., where LCD has a backlight, while OLED, miniLED, and microLED are self-emissive. When the vehicle-mounted display screen is a LCD screen, since a backlight is also required, the display system may further include a backlight control circuit, and respective backlight sources are provided for different display areas, so that when a certain display area is not displaying, the corresponding backlight source can be turned off, thereby turning off the backlight display of that display area. The backlight control circuit may drive the backlight sources based on backlight control signals provided by the processor system, such that when the display control circuit prohibits the display operation of the central control display area and/or the front-passenger-seat display area, the backlight control circuit controls the corresponding backlight sources to turn off based on the backlight control signals, thereby turning off the backlight display of these display areas.

As described above, the display system shown in FIG. 2 can be used to implement partitioned display, so that when it is determined, after the motor vehicle is started, that the front-passenger seat is unoccupied, the display operation of the non-driver-seat display area can be controlled in a low-power-consumption mode.

Optionally, controlling the display operation of the non-driver-seat display area in a low-power-consumption mode may include: prohibiting the display operation of at least a portion of the non-driver-seat display area, or controlling at least a portion of the non-driver-seat display area to display low-power-consumption data.

The following describes in detail how to perform partitioned display using the display system shown in FIG. 2 (including controlling the display operation of the non-driver-seat display area in a low-power-consumption mode).

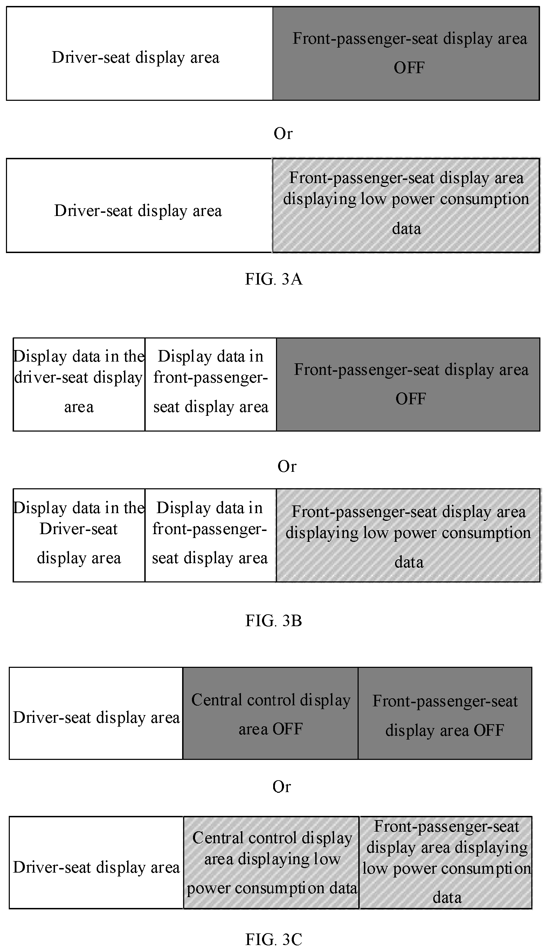

FIGS. 3A-3E show schematic diagrams of displays on the vehicle-mounted display screen when the display control circuit controls the non-driver-seat display area in a low-power-consumption mode, where the driver-seat display area is displayed normally.

For example, in a case where the non-driver-seat display area includes only the front-passenger-seat display area (i.e., the display area of the vehicle-mounted display screen is divided into the driver-seat display area and the front-passenger-seat display area), as shown in FIG. 3A, the display operation of the front-passenger-seat display area may be prohibited or the front-passenger-seat display area may be controlled to display low-power-consumption data (instead of the image data that should be displayed, e.g., entertainment data or interaction information with other devices), and the driver-seat display area may be controlled to display corresponding display data (e.g., vehicle-related information or instrument panel data); alternatively, as shown in FIG. 3B, the display operation of the front-passenger-seat display area may be prohibited or the front-passenger-seat display area may be controlled to display low-power-consumption data, and the driver-seat display area may be controlled to display display data corresponding to both the driver-seat display area and the front-passenger-seat display area (e.g., displaying both instrument panel data and entertainment data in the driver-seat display area). This approach can avoid the inability to timely process display data of the front-passenger-seat display area, such as message reminders.

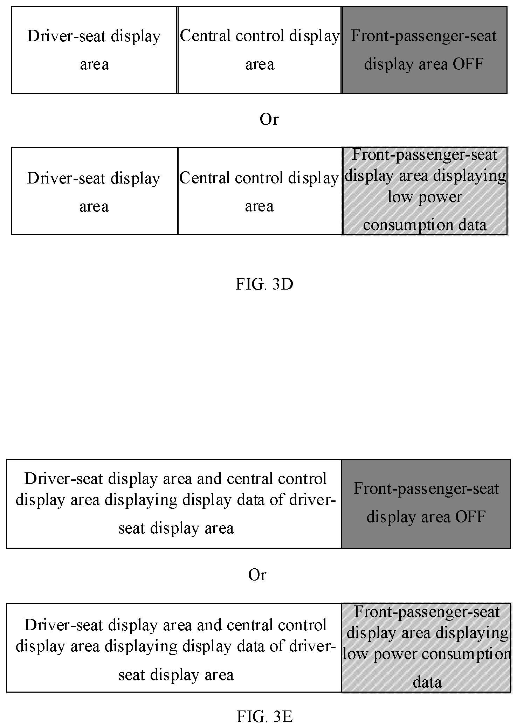

As another example, in a case where the non-driver-seat display area includes a front-passenger-seat display area and a central control display area (i.e., the display area of the vehicle-mounted display screen is divided into a driver-seat display area, a central control display area, and a front-passenger-seat display area), as shown in FIG. 3C, the display operations of the central control display area and the front-passenger-seat display area may be prohibited or they may be controlled to display low-power-consumption data, and the driver-seat display area may be controlled to display corresponding display data (e.g., instrument panel data); alternatively, as shown in FIG. 3D, the display operation of the front-passenger-seat display area may be prohibited or the front-passenger-seat display area may be controlled to display low-power-consumption data, and the driver-seat display area and the central control display area may be controlled to display corresponding display data; alternatively, as shown in FIG. 3E, the display operation of the front-passenger-seat display area may be prohibited or the front-passenger-seat display area may be controlled to display low-power-consumption data, and the central control display area and the driver-seat display area may be controlled to jointly display display data corresponding to the driver-seat display area. This approach can improve the driver's visual experience of viewing the display data corresponding to the driver-seat display area, for example, by seeing a large-size instrument panel. Of course, it is also possible to prohibit the display operations of the central control display area and the front-passenger-seat display area or control them to display low-power-consumption data, and control the driver-seat display area to display display data corresponding to the driver-seat display area and at least one of the central control display area and the front-passenger-seat display area (not shown); or to prohibit the display operation of the front-passenger-seat display area or control it to display low-power-consumption data, and control the driver-seat display area and the central control display area to display display data corresponding to the driver-seat display area, the central control display area, and the front-passenger-seat display area (not shown), etc.

The manner of controlling the non-driver-seat display area in a low-power-consumption mode can be selected according to actual conditions. Turning off the non-driver-seat display area can significantly reduce the display power consumption of the vehicle-mounted display, while displaying low-power-consumption data in the non-driver-seat display area can reduce display power consumption to a certain extent, and at the same time improve the visual experience in the vehicle, for example, the low-power-consumption data may be clock data, wallpaper data, etc. When the display content of any display area is changed (for example, as shown in FIG. 3B, the driver-seat display area needs to display content that should be displayed by both the driver-seat display area and the front-passenger-seat display area, or the display content corresponding to the driver-seat display area needs to be displayed in the driver-seat display area and the central control display area), the SOC of the display system may re-render the current frame image to make it conform to the attributes (e.g., resolution, aspect ratio, etc.) of the display area to be used for display, so as to control the display operation of that display area via the timing controller and driving circuit.

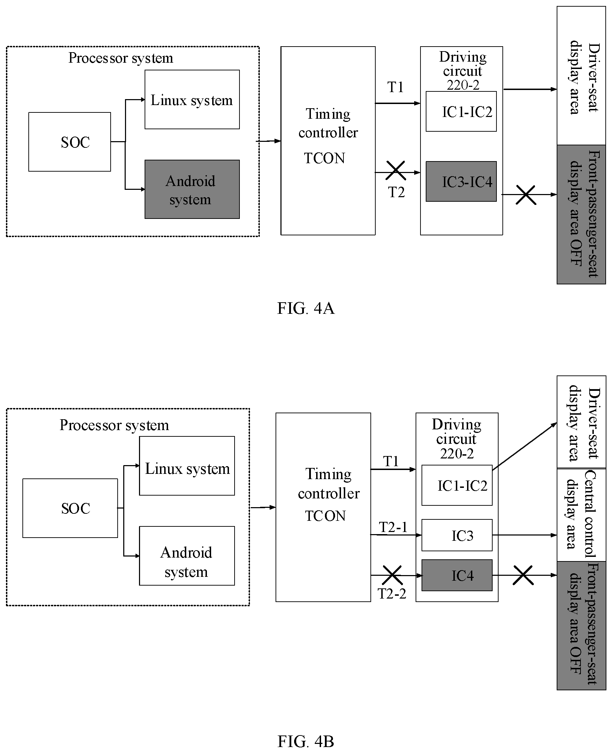

FIGS. 4A-4D show schematic diagrams of the system structure when the display control circuit includes a single timing controller (first timing controller) and schematic diagrams of the system operation for controlling the non-driver-seat display area in a low-power-consumption mode.

The vehicle-mounted display screen shown in FIG. 4A includes two parts: a driver-seat display area and a front-passenger-seat display area. The vehicle-mounted display screens shown in FIGS. 4B-4D include three parts: a driver-seat display area, a central control display area, and a front-passenger-seat display area.

As mentioned above, the driver-seat display area and the non-driver-seat display area can be controlled through multiple operating systems, and the non-driver-seat display area may correspond to one or more virtual operating systems (e.g., Android system) run on a virtual machine hosted by the operating system of the processor system of the display system. At this time, the driver-seat display area may correspond to another operating system (e.g., the QNX system or a virtual Linux system (hereinafter taken as an example)) run on the virtual machine.

More specifically, the display control circuit may be configured to: prohibit the display operation of the central control display area and/or the front-passenger-seat display area by prohibiting the first timing controller from outputting, to the driving circuit, at least a portion of the second timing signal (the at least a part corresponding to the central control display area and/or the front-passenger-seat display area). Alternatively, the display control circuit may be configured to control the central control display area and/or the front-passenger-seat display area to display low-power-consumption data by causing the first timing controller to output, to the driving circuit, at least a portion of the second timing signal corresponding to the central control display area and/or the front-passenger-seat display area, based on display-control related signals for the low-power-consumption data.

For example, when the display control circuit prohibits the first timing controller from outputting the at least a portion of the second timing signal to the driving circuit, it may control the virtual operating system corresponding to the non-driver-seat display area to stop running; or, in a case where the central control display area and the front-passenger-seat display area correspond to the same virtual operating system (i.e., the non-driver-seat display area corresponds to one virtual operating system), it may control the virtual operating system to keep running and stop outputting display-control related signals (e.g., data signals and timing control signals) for display data (for normal display) corresponding to the central control display area and/or the front-passenger-seat display area to the first timing controller. Similarly, when the first timing controller outputs the at least a portion of the second timing signal to the driving circuit based on display-control related signals for the low-power-consumption data, the virtual operating system may run and output display-control related signals for the low-power-consumption data corresponding to the central control display area and/or the front-passenger-seat display area to the first timing controller.

Optionally, when controlling the virtual operating system corresponding to the non-driver-seat display area to stop running, the display control circuit may be configured to: in a case where the non-driver-seat display area includes only the front-passenger-seat display area, when the front-passenger-seat display area corresponds to a first virtual operating system, control the first virtual operating system to stop running; or, in a case where the non-driver-seat display area includes the front-passenger-seat display area and the central control display area, when the front-passenger-seat display area corresponds to a first virtual operating system and the central control display area corresponds to a second virtual operating system, control the first virtual operating system and/or the second virtual operating system to stop running. By controlling the virtual operating system(s) to stop running, the power consumption of the processor system can be reduced and its resources can be released. Controlling the virtual operating system(s) to stop running may include taking a snapshot of the virtual operating system(s), through which the state of the virtual operating system(s) (including the states of application software within it) can be preserved. When it is necessary to resume the running of the virtual operating system(s), the state can be quickly restored by restoring the snapshot. Controlling the virtual operating system(s) to stop running may also include shutting down the virtual operating system(s). When it is necessary to resume running, the virtual operating system(s) is initiated again.

For example, in FIG. 4A, when the display operation of the front-passenger-seat display area is to be prohibited, the corresponding virtual operating system may not output the display-control related signals for display data corresponding to the front-passenger-seat display area to the first timing controller TCON, so the first timing controller TCON cannot output the second timing signal T2 to the driving circuit (e.g., the two driver chips IC3-IC4 corresponding to the front-passenger-seat display area), and thus the driving circuit cannot output the second driving signal based on the second timing signal T2, so the front-passenger-seat display area does not display. At this time, the virtual operating system may be stopped from running, for example, in a sleep state, or the snapshot of the virtual operating system may be taken to save its current state data. In addition, when the vehicle-mounted display screen is an LCD display screen, the processor system may also control the backlight source corresponding to the front-passenger-seat display area to turn off. When turning off the backlight source corresponding to the front-passenger-seat display area, the first timing controller TCON may still output display-control related signals for display data corresponding to the front-passenger-seat display area, but since there is no backlight source, the display data in the front-passenger-seat display area may not be perceived by the user. However, generally from a power consumption perspective, when the backlight source of a certain display area is turned off, the timing controller should avoid outputting display-control related signals for display data corresponding to that display area to the driving circuit as much as possible.

Alternatively, the virtual operating system may output display-control related signals (e.g., data signals or timing control signals) for the low-power-consumption data (e.g., black screen data, clock, wallpaper image data, etc.) to the first timing controller TCON, so that the first timing controller TCON outputs the second timing signal T2 to the driving circuit (e.g., the two driver chips IC3-IC4 corresponding to the front-passenger-seat display area), enabling the driving circuit to output the second driving signal based on the second timing signal, and thus the front-passenger-seat display area can display that low-power-consumption data.

In the example shown in FIG. 4A, the driver-seat display area is normally displayed. For example, the Linux system corresponding to the driver-seat display area may output display-control related signals for display data corresponding to the driver-seat display area (e.g., instrument panel data, game scene screens, etc.) to the first timing controller TCON, so that the first timing controller TCON outputs the first timing signal T1 to the driving circuit (e.g., the two driver chips IC1-IC2 corresponding to the driver-seat display area), enabling the driving circuit (e.g., the two driver chips IC1-IC2) to output the first driving signal based on the first timing signal T1, and thus the driver-seat display area can display normally.

Similarly, in FIG. 4B, the central control display area and the front-passenger-seat display area correspond to the same virtual operating system. When the display operations of both the central control display area and the front-passenger-seat display area are prohibited or they are controlled to display the low-power-consumption data, the processing is similar to that described with reference to FIG. 4A, only needing to treat the central control display area and the front-passenger-seat display area as equivalent to the front-passenger-seat display area in FIG. 4A.

In FIG. 4B, when the display operation of the front-passenger-seat display area is prohibited (assuming that the case where generally only the display operation of the central control display area is prohibited does not exist), the virtual operating system may not output display-control related signals for display data corresponding to the front-passenger-seat display area to the first timing controller, so the first timing controller TCON cannot output the portion T2-2 of the second timing signal corresponding to the front-passenger-seat display area to the driving circuit (e.g., a driver chip IC4 corresponding to the front-passenger-seat display area) (while the first timing signal T1 for the driver-seat display area and the portion T2-1 of the second timing signal corresponding to the central control display area are output normally), and thus the driving circuit cannot output the corresponding portion of the second driving signal based on that portion T2-2, so the front-passenger-seat display area will not display. At this time, the virtual operating system remains running. In addition, when the vehicle-mounted display screen is an LCD display screen, the processor system may also control the backlight source of the front-passenger-seat display area to turn off. Furthermore, the virtual operating system may similarly output display-control related signals for the lower power consumption data to the first timing controller TCON, so that the low-power-consumption data is finally displayed in the front-passenger-seat display area, and this will not be repeated here.

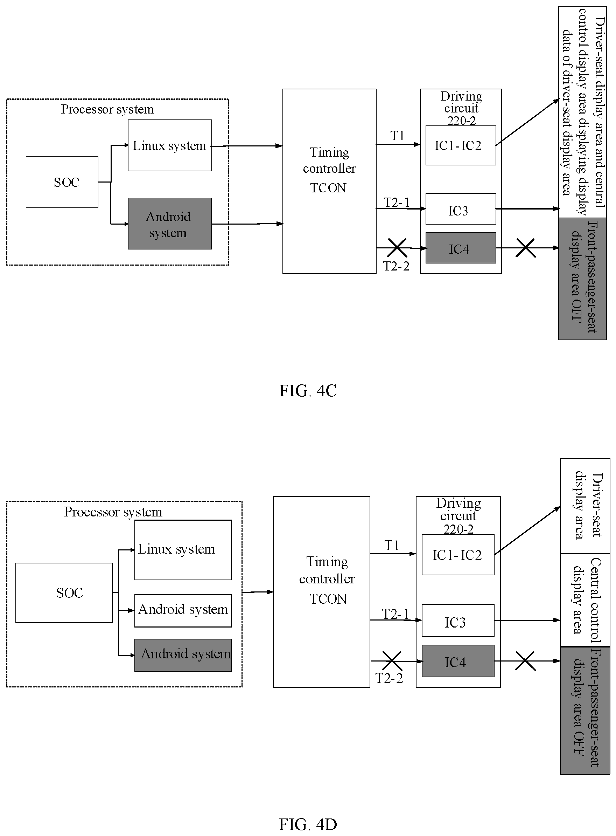

As shown in FIG. 4C, the central control display area and the front-passenger-seat display area correspond to the same virtual operating system. Similar to FIG. 4B, when the display operation of the front-passenger-seat display area is to be prohibited, the virtual operating system may not output display-control related signals for display data corresponding to the front-passenger-seat display area to the first timing controller, so the front-passenger-seat display area will not display. At the same time, the operating system corresponding to the driver-seat display area may output signals to the first timing controller, so the first timing controller may provide timing signals for the driver-seat display area and the central control display area to the driving circuit (e.g., driver chips IC1-IC3 corresponding to the driver-seat display area and the central control display area), and thus the driving circuit can drive the display of data (e.g., instrument panel data) that should be displayed in the driver-seat display area in these two display areas. At this time, the virtual operating system corresponding to the central control display area and the front-passenger-seat display area may stop running. In addition, the virtual operating systems corresponding to the central control display area and the front-passenger-seat display area may similarly output display-control related signals for the lower power consumption data to the first timing controller TCON, so that the low-power-consumption data is finally displayed in the front-passenger-seat display area, and this will not be repeated here.

As shown in FIG. 4D, the central control display area and the front-passenger-seat display area correspond to different virtual operating systems. When the display operation of the front-passenger-seat display area (here taken as an example) is to be prohibited, the corresponding virtual operating system stops running to stop outputting display-control related signals for display data corresponding to the front-passenger-seat display area to the first timing controller, so the first timing controller TCON does not output the portion T2-2 of the second timing signal corresponding to the front-passenger-seat display area to the driving circuit, and thus the driving circuit (e.g., a driver chip IC4 corresponding to the front-passenger-seat display area) cannot output the corresponding portion of the second driving signal based on that portion of the second timing signal, so the front-passenger-seat display area will not display. In addition, the virtual operating system corresponding to the front-passenger-seat display area may similarly output display-control related signals for the lower power consumption data to the first timing controller TCON, so that the low-power-consumption data is finally displayed in the front-passenger-seat display area, and this will not be repeated here.

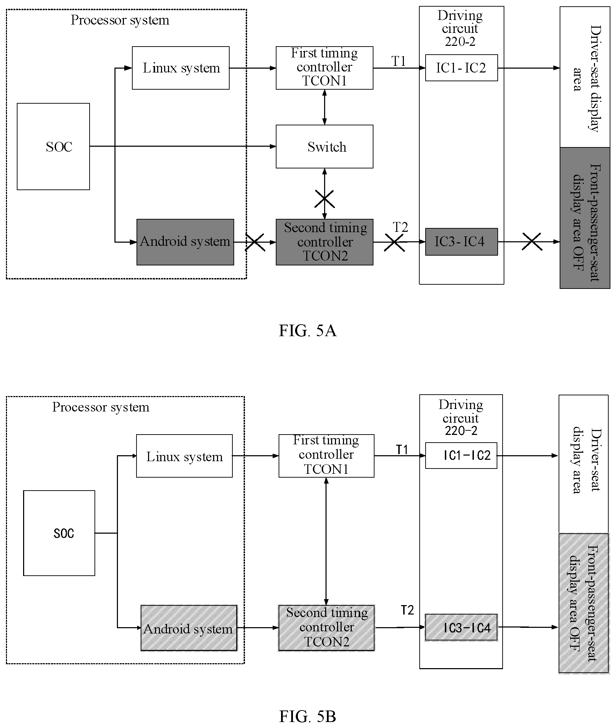

FIGS. 5A-5F show schematic diagrams of the system structure when the display control circuit includes two timing controllers (first and second timing controllers) and schematic diagrams of the system operation for controlling the non-driver-seat display area in a low-power-consumption mode.

In this case, the first timing controller may correspond to the driver-seat display area, and the second timing controller may correspond to the non-driver-seat display area. The first timing controller and the second timing controller are cascaded via a switch, and the second timing controller as a slave device needs to obtain signals from the first timing controller as a master device to ensure that the timing of the timing signals output by both meets the requirements. At this time, the first timing controller may output the first timing signal to the driving circuit (e.g., the two driver chips IC1-IC2 corresponding to the driver-seat display area), so that the driving circuit can provide the first driving signal to the pixels in the driver-seat display area on the display screen, and the second timing controller may output the second timing signal to the driving circuit (e.g., the two driver chips IC3-IC4 corresponding to the non-driver-seat display area), so that the driving circuit can provide the second driving signal to the pixels in the non-driver-seat display area on the display screen.

Based on this configuration of the two timing controllers, when the display control circuit prohibits the display operation of the central control display area and/or the front-passenger-seat display area, it may be configured to: turn off the switch between the first timing controller and the second timing controller to prohibit the second timing controller from outputting the second timing signal to the driving circuit; or keep the switch between the first timing controller and the second timing controller turned on, and prohibit the second timing controller from outputting at least a portion of the second timing signal corresponding to the central control display area and/or the front-passenger-seat display area to the driving circuit.

Alternatively, when the display control circuit controls the central control display area and/or the front-passenger-seat display area to the display low-power-consumption data, it may be configured to: keep the switch between the first timing controller and the second timing controller turned on, and cause the second timing controller to output at least a portion of the second timing signal corresponding to the central control display area and/or the front-passenger-seat display area to the driving circuit based on display-control related signals for the lower power consumption data.

The vehicle-mounted display screen shown in FIGS. 5A-5B includes two parts: a driver-seat display area and a front-passenger-seat display area, and the driver-seat display area corresponds to one operating system (e.g., QNX or Linux system), and the front-passenger-seat display area corresponds to a virtual operating system (e.g., Android system). The switch control signal may come from the system-on-chip.

For example, in FIG. 5A, when the display operation of the front-passenger-seat display area is to be prohibited, the switch between the two timing controllers is turned off, so the second timing controller TCON2 cannot output the second timing signal T2 to the driving circuit (e.g., the two driver chips IC3-IC4 corresponding to the front-passenger-seat display area) (while the first timing signal T1 for the driver-seat display area is output normally), and thus the driving circuit cannot output the second driving signal based on the second timing signal T2. At this time, the virtual operating system corresponding to the front-passenger-seat display area may be stopped from running, for example, in a sleep state, and its current state data (e.g., snapshot) may be saved. In addition, when the vehicle-mounted display screen is an LCD display screen, the operating system of the display system may also control the backlight source corresponding to the front-passenger-seat display area to turn off.

Alternatively, in FIG. 5B, when controlling the front-passenger-seat display area to display the low-power-consumption data, the switch between the first timing controller TCON1 and the second timing controller TCON2 may be kept turned on, and the second timing controller TCON2 may output the second timing signal to the driving circuit (e.g., the two driver chips IC3-IC4 corresponding to the front-passenger-seat display area) based on display-control related signals for the lower power consumption data output by its corresponding virtual operating system and interaction with the first timing controller via the switch, so that the driving circuit can output the second driving signal based on the second timing signal T2.

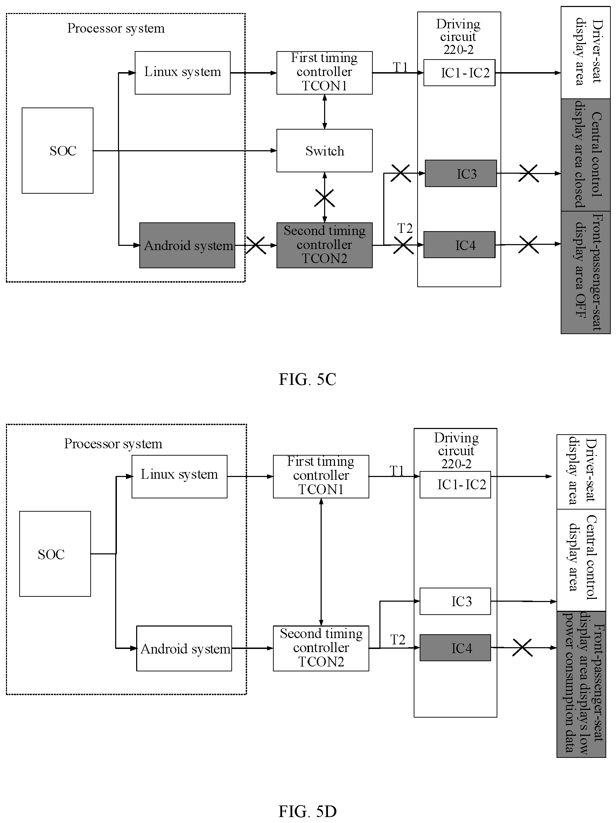

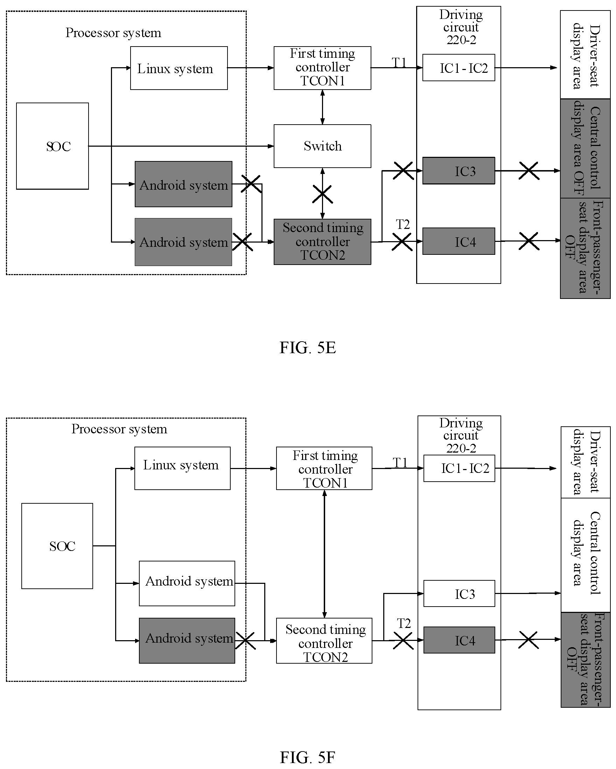

The vehicle-mounted display screens shown in FIGS. 5C-5F include three parts: a driver-seat display area, a central control display area, and a front-passenger-seat display area, and the driver-seat display area corresponds to one operating system (e.g., QNX or Linux system), while the central control display area and the front-passenger-seat display area correspond to a first virtual operating system (FIGS. 5C-5D), or the central control display area corresponds to a first virtual operating system and the front-passenger-seat display area corresponds to a second virtual operating system (FIGS. 5E-5F).

In FIG. 5C, the central control display area and the front-passenger-seat display area correspond to the same virtual operating system, and are used to output signals to the second timing controller when needed. Since the second timing controller can control both the central control display area and the front-passenger-seat display area simultaneously, when the display operation of the central control display area and/or the front-passenger-seat display area is to be prohibited, the switch between the two timing controllers may be turned off, and the virtual operating system may stop running, so the second timing controller does not work and thus does not provide the second timing signal to the driving circuit. In addition, when the vehicle-mounted display screen is an LCD display screen, the processor system may also control the backlight source of the non-driver-seat display area to turn off. Furthermore, although not shown, the switch may be kept turned on so that the virtual operating system may output display-control related signals for the lower power consumption data corresponding to the central control display area and/or the front-passenger-seat display area to the second timing controller TCON2, so that the low-power-consumption data is finally displayed in the central control display area and/or the front-passenger-seat display area (while other display areas are displayed normally), and this will not be repeated here.

As shown in FIG. 5D, the central control display area and the front-passenger-seat display area correspond to the same virtual operating system, and are used to output signals to the second timing controller when needed. When the display operation of the front-passenger-seat display area is to be prohibited, the switch between the two timing controllers may be kept turned on, the virtual operating system (Android system) keeps running, and the second timing controller TCON2 works, but it does not provide the portion of the second timing signal corresponding to the front-passenger-seat display area to the driving circuit (while it normally provides the portion of the second timing signal corresponding to the central control display area and the first timing controller TCON1 normally provides the first timing signal corresponding to the driver-seat display area). In addition, when the vehicle-mounted display screen is an LCD display screen, the processor system may also control the backlight source of the front-passenger-seat display area to turn off. Furthermore, although not shown, the virtual operating system may also output display-control related signals for the lower power consumption data corresponding to the front-passenger-seat display area to the second timing controller TCON2, so that the low-power-consumption data is finally displayed in the front-passenger-seat display area (while other display areas are displayed normally), and this will not be repeated here.

As shown in FIG. 5E, the central control display area corresponds to a first virtual operating system and the front-passenger-seat display area corresponds to a second virtual operating system, and both virtual operating systems can output signals to the second timing controller when needed. Therefore, when the display operation of the central control display area and/or the front-passenger-seat display area is to be prohibited, the switch between the two timing controllers may be turned off, and the first and second virtual operating systems may stop running, so the second timing controller does not work and thus does not provide the second timing signal to the driving circuit. In addition, when the vehicle-mounted display screen is an LCD display screen, the processor system may also control the backlight source of the non-driver-seat display area to turn off. Furthermore, although not shown, the switch may be kept turned on so that the first and/or second virtual operating system may similarly output display-control related signals for the lower power consumption data corresponding to the central control display area and/or the front-passenger-seat display area to the second timing controller TCON2, so that the low-power-consumption data is finally displayed in the central control display area and/or the front-passenger-seat display area (while other display areas are displayed normally), and this will not be repeated here.

As shown in FIG. 5F, the central control display area corresponds to a first virtual operating system and the front-passenger-seat display area corresponds to a second virtual operating system, and both virtual operating systems can output signals to the second timing controller when needed. Therefore, when the display operation of the front-passenger-seat display area is to be prohibited, the switch between the two timing controllers may be kept turned on, the first virtual operating system (Android system) keeps running, the second virtual operating system stops running, and the second timing controller TCON2 works, but it does not provide the portion of the second timing signal corresponding to the front-passenger-seat display area to the driving circuit (while it normally provides the portion of the second timing signal corresponding to the central control display area and the first timing controller TCON1 normally provides the first timing signal corresponding to the driver-seat display area). In addition, when the vehicle-mounted display screen is an LCD display screen, the processor system may also control the backlight source of the front-passenger-seat display area to turn off. Furthermore, although not shown, the second virtual operating system may similarly output display-control related signals for the lower power consumption data corresponding to the front-passenger-seat display area to the second timing controller TCON2, so that the low-power-consumption data is finally displayed in the front-passenger-seat display area (while other display areas are displayed normally), and this will not be repeated here.

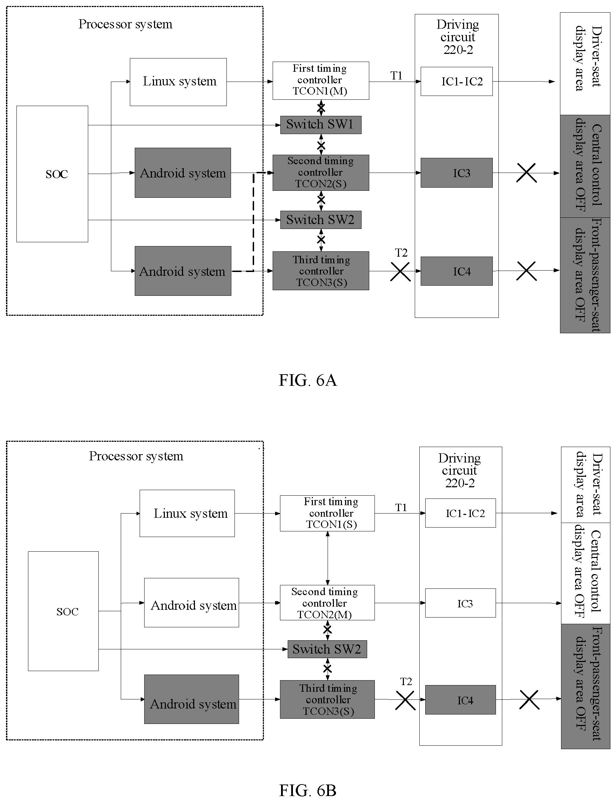

FIGS. 6A-6B show schematic diagrams of the system structure when the display control circuit includes three timing controllers and schematic diagrams of the system operation for controlling the non-driver-seat display area in a low-power-consumption mode.

In FIGS. 6A-6B, three timing controllers correspond to the driver-seat display area, the central control display area, and the front-passenger-seat display area respectively, and two switches are included to cascade the three timing controllers. FIG. 6A shows the timing controller corresponding to the driver-seat display area as the master device (M), and FIG. 6B shows the timing controller corresponding to the central control display area as the master device.

When prohibiting the display operation of the central control display area and/or the front-passenger-seat display area, the display control circuit may be configured to: turn off the switch between the timing controller corresponding to the central control display area and/or the front-passenger-seat display area and the other timing controllers, so as to prohibit outputting at least a portion of the second timing signal corresponding to the central control display area and/or the front-passenger-seat display area to the driving circuit.

In addition, when controlling the non-driver-seat display area to display the low-power-consumption data, the display control circuit is configured to: keep the switches between the three timing controllers turned on, and cause the timing controller corresponding to the central control display area and/or the front-passenger-seat display area to output at least a portion of the second timing signal corresponding to the central control display area and/or the front-passenger-seat display area to the driving circuit based on display-control related signals for the lower power consumption data.

For example, as shown in FIG. 6A, when the display operations of the central control display area and the front-passenger-seat display area are to be prohibited, the two switches SW1 and SW2 may be turned off, so the second timing controller and the third timing controller cannot obtain signals from the first timing controller, and thus neither the second timing controller nor the third timing controller outputs a timing signal (second timing signal) to the driving circuit. Similarly, although not shown, when the display operation of the front-passenger-seat display area is to be prohibited, the second switch SW2 may be turned off, so the second timing controller can obtain signals from the first timing controller, but the third timing controller cannot obtain signals from the second timing controller, so the second timing controller may output the timing signal (the portion of the second timing signal corresponding to the central control display area) to the driving circuit, and the third timing controller does not output the timing signal (the portion of the second timing signal corresponding to the front-passenger-seat display area).

As another example, as shown in FIG. 6B, since the second timing controller corresponding to the central control display area acts as the master device, the second timing controller needs to keep working, so the central control display area keeps displaying (normal display data or low-power-consumption data), and generally the driver-seat display area should also display normally (receiving signals from the second timing controller as the master device). When the display operation of the front-passenger-seat display area is prohibited, the second switch SW2 between the second timing controller and the third timing controller may be turned off, so the third timing controller cannot obtain signals from the second timing controller, and thus the third timing controller does not output the timing signal (the portion of the second timing signal corresponding to the front-passenger-seat display area) to the driving circuit.

Similar to the above, when controlling the central control display area and/or the front-passenger-seat display area to display the low-power-consumption data, the two switches SW1 and SW2 are turned on, i.e., all three timing controllers work normally, but the second and/or third timing controller needs to obtain display-control related signals for the lower power consumption data from the corresponding virtual operating system.

In addition, the correspondence between the three timing controllers and the operating systems may also be determined as follows: for example, the first timing controller corresponds to the first operating system; the second timing controller corresponds to the first virtual operating system, and the third timing controller corresponds to the second virtual operating system; or both the second and third timing controllers correspond to the first virtual operating system.

It should be noted that schematic diagrams of various exemplary system structures have been schematically described above with reference to FIGS. 4A-6B, but these are only examples and are not limitations of the present disclosure. Other structures may exist based on these, which may define different correspondences between virtual operating systems, timing controllers, driver chips, and/or various display areas.

In addition, the control of pixels of the display panel of the display screen may be implemented by half-screen control, to achieve the effect of controlling the driver-seat display area, the central control display area, and the front-passenger-seat display area. For example, when it is necessary to prohibit the display operations of the central control display area and the front-passenger-seat display area or control them to display the low-power-consumption data, the display operation of the right half-screen display area may be prohibited or controlled to display the low-power-consumption data, and for the left half-screen display area, the area corresponding to the driver-seat display area is controlled to display normally, while the display operation of the remaining area is prohibited or the remaining area is controlled to display the low-power-consumption data. As another example, when it is necessary to prohibit the display operation of the front-passenger-seat display area or control it to display the low-power-consumption data, the display operations of both the left and right half-screen display areas may be kept, and the area corresponding to the central control display area in the right half-screen is controlled to display normally, while the remaining area is controlled to display the low-power-consumption data.

For example, the overall horizontal resolution of the vehicle-mounted display screen is 7680, and the display area only needs to display the first 2560 columns of pixels for the driver to view as the driver-seat display area. While turning off the backlight source of the right half-screen or not outputting driving signals to it, the virtual system may output display data for 2560 columns of pixels plus low-power-consumption data for 1280 columns of pixels for the left half-screen, thereby achieving the display on 1/3 of the left screen. At this time, according to the correspondences between the virtual control systems, timing controllers, and driving circuits described above, the virtual control systems can be reasonably configured to control the half-screen display areas to achieve the effect of controlling the driver-seat display area, the central control display area, and the front-passenger-seat display area.

On the other hand, as mentioned above, the display control circuit is further configured to: when it is determined, in a state where the front-passenger seat is unoccupied, that the front-passenger seat becomes occupied, switch to control the display operation of the non-driver-seat display area in a normal mode. At this time, in the case of a single timing controller (first timing controller), it may be configured such that the first timing controller outputs the second timing signal corresponding to the non-driver-seat display area to the driving circuit based on display-control related signals of corresponding display data (and also outputs the first timing signal corresponding to the driver-seat display area simultaneously).

For example, the virtual operating system(s) that was deactivated in the low-power-consumption mode may be resumed to output display-control related signals for corresponding display data to the first timing controller; or the virtual operating system (s) that was providing the low-power-consumption data to the first timing controller in the low-power-consumption mode may be controlled to provide display-control related signals for corresponding display data to the first timing controller; or, in a case where the central control display area and the front-passenger-seat display area correspond to the same virtual operating system, the virtual operating system may be controlled to output display-control related signals for corresponding display data to the first timing controller.

For example, for the case of FIG. 4A, when the front-passenger-seat display area is controlled to resume the normal display operation, the virtual operating system corresponding to the front-passenger-seat display area resumes running, so that it can output display-control related signals for display data corresponding to the front-passenger-seat display area to the first timing controller TCON, and thus the first timing controller TCON can output the second timing signal T2 to the driving circuit (e.g., the two driver chips IC3-IC4 corresponding to the front-passenger-seat display area) (and also output the first timing signal T1 for the driver-seat display area to the driving circuit (e.g., the two driver chips IC1-IC2 corresponding to the driver-seat display area)), so that the driving circuit can output the first driving signal and the second driving signal. In addition, when the vehicle-mounted display screen is an LCD display screen, the operating system of the display system may also control the backlight source corresponding to the front-passenger-seat display area to turn on.

For example, for the case of FIG. 4B, the central control display area and the front-passenger-seat display area correspond to the same virtual operating system. When the front-passenger-seat display area and/or the central control display area is controlled to resume the normal display operation, the virtual operating system may output display-control related signals for display data corresponding to the front-passenger-seat display area and/or the central control display area to the first timing controller, so the first timing controller TCON may output the second timing signal T2 to the driving circuit (e.g., the driver chips corresponding to the front-passenger-seat display area and the central control display area), and also output the first timing signal T1 for the driver-seat display area to the driving circuit (e.g., the driver chips corresponding to the driver-seat display area), so that the driving circuit can output the first driving signal and the second driving signal, and all display areas can display normally.

For example, for the case of FIG. 4C, the central control display area and the front-passenger-seat display area correspond to the same virtual operating system. Similar to FIG. 4B, when the front-passenger-seat display area is controlled to resume the normal display operation, the virtual operating system may output display-control related signals for display data corresponding to the front-passenger-seat display area to the first timing controller. At the same time, the virtual operating system may output display-control related signals for display data corresponding to the central control display area to the first timing controller, and the operating system corresponding to the driver-seat display area may output display-control related signals for display data corresponding to the driver-seat display area to the first timing controller. Therefore, the first timing controller may also provide the first and second timing signals to the driving circuit (e.g., the driver chips respectively corresponding to the driver-seat display area, the central control display area, and the front-passenger-seat display area), so that the driving circuit can drive the corresponding display data to be displayed normally in each display area.

For example, for the case of FIG. 4D, the central control display area and the front-passenger-seat display area correspond to different virtual operating systems. When the front-passenger-seat display area is controlled to resume the normal display operation, the one of the two virtual operating systems that was previously stopped resumes running, so all operating systems can output display-control related signals for corresponding display data to the first timing controller, and thus the first timing controller TCON can output the portion T2-2 of the second timing signal corresponding to the front-passenger-seat display area to the driving circuit (e.g., a driver chip IC4 corresponding to the front-passenger-seat display area), and also output the first timing signal T1 for the driver-seat display area and the portion T2-1 of the second timing signal corresponding to the central control display area to the driving circuit (e.g., the three driver chips IC1-IC3 corresponding to the driver-seat display area and the central control display area), so that the driving circuit can output the first driving signal and the second driving signal, and thus corresponding display data is displayed normally in each display area.

Furthermore, for the cases of FIGS. 4A-4D, while the display area displays the low-power-consumption data in the low-power-consumption mode, when switching to the normal mode, the virtual operating system that was providing the low-power-consumption data to the first timing controller in the low-power-consumption mode may also be controlled to provide display-control related signals for corresponding display data to the first timing controller, so that the driving circuit can normally output the first driving signal and the second driving signal, and thus corresponding display data is displayed normally in each display area.

On the other hand, when the display control circuit switches to control the display operation of the non-driver-seat display area in the normal mode, in the case of two timing controllers (as shown in FIGS. 5A-5F), it may be configured to: turn on the switch between the first timing controller and the second timing controller, and all operating systems run normally and output display-control related signals for normal display data, so that the second timing controller outputs the second timing signal corresponding to the non-driver-seat display area to the driving circuit based on display-control related signals for corresponding display data, and the first timing controller outputs the first timing signal corresponding to the driver-seat display area to the driving circuit, so that corresponding display data is displayed normally in each display area.

On the other hand, when the display control circuit switches to control the display operation of the non-driver-seat display area in the normal mode, in the case of three timing controllers (as shown in FIGS. 6A-6B), it may be configured to: turn on the switches between the three timing controllers, and all operating systems run normally and output normal display data, so that the timing controller corresponding to the non-driver-seat display area outputs the second timing signal to the driving circuit based on display-control related signals for corresponding display data, and the timing controller corresponding to the driver-seat display area outputs the first timing signal corresponding to the driver-seat display area to the driving circuit, so that corresponding display data is displayed normally in each display area.

It can be seen that based on the system structure diagrams and system operation schematic diagrams described above in conjunction with FIGS. 4A-6B, when the display control circuit determines to control the non-driver-seat display area in a low-power-consumption mode based on the detection result of whether the front-passenger seat is occupied, it can realize display operation control of each area on the vehicle-mounted display screen through multiple operating systems by running a virtual machine. In this way, using a combination of software and hardware, when the front-passenger seat changes from unoccupied to occupied, the display operation corresponding to the front-passenger-seat display area can be started and/or the virtual operating system corresponding to the front-passenger-seat display area can be started; when the front-passenger seat changes from occupied to unoccupied, the display corresponding to the front-passenger-seat display area is prohibited and/or the virtual operating system corresponding to the front-passenger-seat display area is turned off. Thus, display power consumption and processor power consumption can be reduced, and user experience can be improved.

According to another aspect of the present disclosure, a display control method for a vehicle-mounted display screen is also provided.

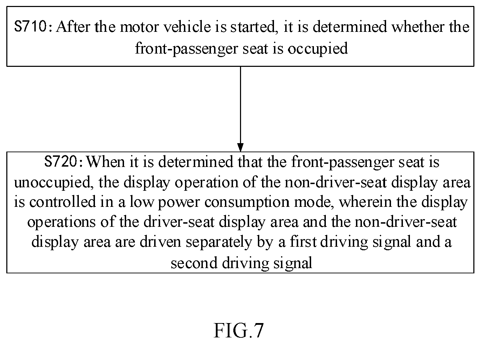

FIG. 7 shows a schematic flowchart of a display control method for a vehicle-mounted display screen according to an embodiment of the present disclosure. The vehicle-mounted display screen may be a vehicle-mounted display screen as shown in FIG. 1, and may include a driver-seat display area and a non-driver-seat display area, and the non-driver-seat display area includes at least a front-passenger-seat display area. The display control method may be performed by the aforementioned display system (e.g., processor system, display control circuit, and driving circuit).

As shown in FIG. 7, in step S710, after the motor vehicle is started, it is determined whether the front-passenger seat is occupied.

Optionally, determining whether the front-passenger seat is occupied may include: determining, after the motor vehicle is started, that the front-passenger seat is unoccupied only when the duration for which the front-passenger seat has been unoccupied exceeds a preset threshold.

In step S720, when it is determined that the front-passenger seat is unoccupied, the display operation of the non-driver-seat display area is controlled in a low-power-consumption mode, wherein the display operations of the driver-seat display area and the non-driver-seat display area are separately driven by a first driving signal and a second driving signal.

Optionally, controlling the display operation of the non-driver-seat display area in a low-power-consumption mode may include: prohibiting the display operation of at least a portion of the non-driver-seat display area, or controlling at least a portion of the non-driver-seat display area to display low-power-consumption data.

For example, the control of the low-power-consumption mode of the display operation of the non-driver-seat display area may be specifically implemented through a combination of multiple operating systems and one or more timing controllers as previously described with reference to FIGS. 4A-6B.

In addition, the method 700 may further include the step of: when it is determined, in a state where the front-passenger seat is unoccupied, that the front-passenger seat becomes occupied, switching to control the display operation of the non-driver-seat display area in a normal mode.

In the normal mode, each display area of the vehicle-mounted display screen will normally display corresponding display data (e.g., instrument panel data, navigation data, entertainment audio/video data, etc.).

For more details of the steps of method 700, reference may be made to the foregoing description with respect to FIGS. 1-6B, and thus they are not repeated here.

According to yet another aspect of the present disclosure, a motor vehicle is also provided.

The motor vehicle may include a display system as previously described, to dynamically control the display on the vehicle-mounted display screen according to whether the front-passenger seat is occupied. This can reduce display power consumption and processor power consumption.

Optionally, the processor system described above may be specifically a SOC or other processing system, for example, the other processing system may include a processor coupled to a computer-readable medium/memory via a bus. In certain aspects, the computer-readable medium/memory is configured to store instructions (e.g., computer-executable code) that, when executed by the processor, cause the processor to perform other operations of the processor system discussed herein. In certain aspects, the computer-readable medium/memory stores various code. In certain aspects, the processor has circuitry configured to implement code stored in the computer-readable medium/memory.

The methods disclosed herein include one or more steps or actions for achieving the methods. The method steps and/or actions may be interchanged with one another without departing from the scope of the claims. In other words, unless a specific order of steps or actions is specified, the order and/or use of specific steps and/or actions may be modified without departing from the scope of the claims.

As used herein, a phrase referring to "at least one of" and "and/or" of a list of items refers to any combination of those items, including single members. For example, "at least one of a, b, or c" is intended to cover a, b, c, a-b, a-c, b-c, and a-b-c; "a and/or b" is intended to cover a, b, and a-b.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but are to be accorded the full scope consistent with the language of the claims, wherein reference to an element in the singular is not intended to mean "one and only one" unless specifically so stated, but rather "one or more." Unless specifically stated otherwise, the term "some" refers to one or more. All structural and functional equivalents to the elements described throughout the various aspects of this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims.

The exemplary embodiments of the present disclosure described in detail above are illustrative only and not restrictive. It should be understood by those skilled in the art that various modifications and combinations can be made to these embodiments or features thereof without departing from the principles and spirit of the present disclosure, and such modifications should fall within the scope of the present disclosure.

## Claims

1. A display system for a motor vehicle, the display system comprising:
a vehicle-mounted display screen including a single screen divided into a driver-seat display area and a non-driver-seat display area, wherein the non-driver-seat display area includes at least a front-passenger-seat display area; and
a display control circuit for generating a first driving signal for the driver-seat display area and a second driving signal for the non-driver-seat display area, to drive display operations of the driver-seat display area and the non-driver-seat display area respectively;
wherein the display control circuit is configured to: when determining, after the motor vehicle is started, that a front-passenger seat of the motor vehicle is unoccupied, control, in a low-power-consumption mode, the display operation of the non-driver-seat display area.

2. The display system according to claim 1, wherein the display control circuit determines that the front-passenger seat is unoccupied, in response to a determination, after the motor vehicle is started, that a duration for which the front-passenger seat has been unoccupied exceeds a preset threshold.

3. The display system according to claim 1, wherein controlling, in a low-power-consumption mode, the display operation of the non-driver-seat display area comprises:
prohibiting the display operation of at least a portion of the non-driver-seat display area, or control at least a portion of the non-driver-seat display area to display low-power-consumption data,
wherein the non-driver-seat display area includes the front-passenger-seat display area, or includes a central control display area and the front-passenger-seat display area.

4. The display system according to claim 3, wherein, when prohibiting the display operation of at least a portion of the non-driver-seat display area, the display control circuit is configured to:
in a case where the non-driver-seat display area includes only the front-passenger-seat display area,
prohibit the display operation of the front-passenger-seat display area, and control the driver-seat display area to display corresponding display data or control the driver-seat display area to display display data corresponding to both the driver-seat display area and the front-passenger-seat display area; and
in a case where the non-driver-seat display area includes the front-passenger-seat display area and the central control display area,
prohibit the display operations of the central control display area and the front-passenger-seat display area, and control the driver-seat display area to display corresponding display data or control the driver-seat display area to display display data corresponding to the driver-seat display area and at least one of the central control display area and the front-passenger-seat display area; or
prohibit the display operation of the front-passenger-seat display area, and control the central control display area and the driver-seat display area to display corresponding display data, or control the central control display area and the driver-seat display area to jointly display display data corresponding to the driver-seat display area; and
wherein, when controlling at least a portion of the non-driver-seat display area to display low-power-consumption data, the display control circuit is configured to:
in a case where the non-driver-seat display area includes only the front-passenger-seat display area,
control the front-passenger-seat display area to display the low-power-consumption data, and control the driver-seat display area to display corresponding display data or control the driver-seat display area to display display data corresponding to both the driver-seat display area and the front-passenger-seat display area; and
in a case where the non-driver-seat display area includes the front-passenger-seat display area and the central control display area,
control the central control display area and the front-passenger-seat display area to display the low-power-consumption data, and control the driver-seat display area to display corresponding display data or control the driver-seat display area to display display data corresponding to the driver-seat display area and at least one of the central control display area and the front-passenger-seat display area; or
control the front-passenger-seat display area to display the low-power-consumption data, and control the driver-seat display area and the central control display area to display corresponding display data or control the central control display area and the driver-seat display area to jointly display display data corresponding to the driver-seat display area.

5. The display system according to claim 3, wherein the display control circuit comprises a timing controller and a driving circuit,
the timing controller is configured to provide a first timing signal and a second timing signal respectively corresponding to the driver-seat display area and the non-driver-seat display area to the driving circuit, so that the driving circuit outputs the first driving signal and the second driving signal.

6. The display system according to claim 5, wherein the timing controller comprises a first timing controller,
wherein the display control circuit is configured to prohibit the display operation of the central control display area and/or the front-passenger-seat display area by prohibiting the first timing controller from outputting at least a portion of the second timing signal corresponding to the central control display area and/or the front-passenger-seat display area to the driving circuit; or
the display control circuit is configured to control the central control display area and/or the front-passenger-seat display area to display the low-power-consumption data by enabling the first timing controller to output at least a portion of the second timing signal corresponding to the central control display area and/or the front-passenger-seat display area to the driving circuit based on display-control related signals for the low-power-consumption data.

7. The display system according to claim 6, wherein the non-driver-seat display area corresponds to a virtual operating system, wherein the display control circuit, when prohibiting the first timing controller from outputting the at least a portion of the second timing signal to the driving circuit, is configured to:
control the virtual operating system to stop running; or
in a case where the central control display area and the front-passenger-seat display area correspond to a same virtual operating system, control the virtual operating system to keep running, and stop outputting, to the first timing controller, display-control related signals for display data corresponding to the central control display area and/or the front-passenger-seat display area.

8. The display system according to claim 7, wherein the display control circuit, when controlling the virtual operating system to stop running, is configured to:
in a case where the non-driver-seat display area includes only the front-passenger-seat display area, control a first virtual operating system corresponding to the front-passenger-seat display area to stop running; or
in a case where the non-driver-seat display area includes the front-passenger-seat display area and the central control display area, when the front-passenger-seat display area corresponds to a first virtual operating system and the central control display area corresponds to a second virtual operating system, control the first virtual operating system and/or the second virtual operating system to stop running.

9. The display system according to claim 5, wherein the timing controller comprises a first timing controller and a second timing controller cascaded via a switch, wherein the first timing controller corresponds to the driver-seat display area and the second timing controller corresponds to the non-driver-seat display area;
wherein, the display control circuit, when prohibiting the display operation of the central control display area and/or the front-passenger-seat display area, is configured to:
turn off the switch between the first timing controller and the second timing controller to prohibit the second timing controller from outputting the second timing signal to the driving circuit; or
keep the switch between the first timing controller and the second timing controller turned on, and prohibit the second timing controller from outputting, to the driving circuit, at least a portion of the second timing signal corresponding to the central control display area and/or the front-passenger-seat display area.

10. The display system according to claim 9, wherein the display control circuit, when controlling the central control display area and/or the front-passenger-seat display area to display the low-power-consumption data, is configured to:
keep the switch between the first timing controller and the second timing controller turned on, and control the second timing controller to output, to the driving circuit and based on display-control related signals for the low-power-consumption data, at least a portion of the second timing signal corresponding to the central control display area and/or the front-passenger-seat display area.

11. The display system according to claim 5, wherein the timing controller comprises three timing controllers cascaded via switches, wherein the three timing controllers respectively correspond to the driver-seat display area, the central control display area, and the front-passenger-seat display area;
wherein, the display control circuit, when prohibiting the display operation of the central control display area and/or the front-passenger-seat display area, is configured to:
turn off the switch between the timing controller corresponding to the central control display area and/or the front-passenger-seat display area and other timing controllers, so as to prohibit outputting, to the driving circuit, at least a portion of the second timing signal corresponding to the central control display area and/or the front-passenger-seat display area.

12. The display system according to claim 11, wherein the display control circuit, when controlling the central control display area and/or the front-passenger-seat display area to display the low-power-consumption data, is configured to:
keep the switches between the three timing controllers turned on, and control the timing controller corresponding to the central control display area and/or the front-passenger-seat display area to output, to the driving circuit and based on display-control related signals for the low-power-consumption data, at least a portion of the second timing signal corresponding to the central control display area and/or the front-passenger-seat display area.

13. The display system according to claim 5, wherein the vehicle-mounted display screen is a liquid crystal display screen, and the display control circuit further comprises a backlight control circuit,
wherein the backlight control circuit is configured to control backlight display of the driver-seat display area and the non-driver-seat display area in response to a backlight control signal,
wherein, when the display control circuit prohibits the central control display area and/or the front-passenger-seat display area from displaying corresponding display data, the backlight control circuit controls the backlight display of the central control display area and/or the front-passenger-seat display area to be turned off based on the backlight control signal.

14. The display system according to claim 1, wherein the display control circuit is further configured to: when determining that the front-passenger seat becomes occupied while in a state where the front-passenger seat is unoccupied, switch to control the display operation of the non-driver-seat display area in a normal mode.

15. The display system according to claim 14, wherein the display control circuit comprises a first timing controller and a driving circuit,
when switching to control the display operation of the non-driver-seat display area in the normal mode, the display control circuit is configured to:
enable the first timing controller to output a second timing signal corresponding to the non-driver-seat display area to the driving circuit based on display-control related signals for corresponding display data.

16. The display system according to claim 15, wherein the non-driver-seat display area corresponds to a virtual operating system,
wherein the display control circuit, when switching to control the display operation of the non-driver-seat display area in the normal mode, is further configured to:
resume running the virtual operating system that was deactivated in the low-power-consumption mode to output display-control related signals for corresponding display data to the first timing controller; or
control the virtual operating system that provided low-power-consumption data to the first timing controller in the low-power-consumption mode to output display-control related signals for corresponding display data to the first timing controller; or
in a case where the central control display area and the front-passenger-seat display area correspond to a same virtual operating system, control the virtual operating system to output display-control related signals for corresponding display data to the first timing controller.

17. The display system according to claim 16, wherein the front-passenger-seat display area corresponds to a first virtual operating system, and the central control display area corresponds to a second virtual operating system, wherein the display control circuit, when switching to control the display operation of the non-driver-seat display area in the normal mode, is further configured to:
control the first virtual operating system and/or the second virtual operating system that was deactivated in the low-power-consumption mode to resume running, to output display-control related signals for corresponding display data to the first timing controller; or
control the first virtual operating system and/or the second virtual operating system that provided the low-power-consumption data to the first timing controller in the low-power-consumption mode to provide display-control related signals for corresponding display data to the first timing controller.

18. The display system according to claim 14, wherein the display control circuit comprises a first timing controller and a second timing controller cascaded via a switch and a driving circuit, wherein the first timing controller corresponds to the driver-seat display area and the second timing controller corresponds to the non-driver-seat display area;
wherein the display control circuit, when switching to control the display operation of the non-driver-seat display area in the normal mode, is configured to:
turn on the switch between the first timing controller and the second timing controller, so that the second timing controller outputs the second timing signal corresponding to the non-driver-seat display area to the driving circuit based on display-control related signals for corresponding display data.

19. The display system according to claim 14, wherein the display control circuit comprises three timing controllers cascaded via switches and a driving circuit, wherein the three timing controllers respectively correspond to the driver-seat display area, the central control display area, and the front-passenger-seat display area;
wherein the display control circuit, when switching to control the display operation of the non-driver-seat display area in the normal mode, is configured to:
turn on the switches between the three timing controllers, so that timing controllers corresponding to the non-driver-seat display area output a timing signal to the driving circuit based on display-control related signals for corresponding display data.

20. The display system according to claim 5, wherein the driving circuit includes one or more driver chips, each driver chip corresponding to a display operation of at least a portion of the driver-seat display area or the non-driver-seat display area, and
when the driver chip is turned off or does not receive a timing signal from a timing controller, the display operation of the at least a portion of the driver-seat display area or the non-driver-seat display area is prohibited.

21. A display control method for a vehicle-mounted display screen, the vehicle-mounted display screen including a driver-seat display area and a non-driver-seat display area, and the non-driver-seat display area including at least a front-passenger-seat display area, the method comprising:
determining, after the motor vehicle is started, whether the front-passenger seat is occupied; and
when it is determined that the front-passenger seat is unoccupied, controlling a display operation of the non-driver-seat display area in a low-power-consumption mode,
wherein the display operations of the driver-seat display area and the non-driver-seat display area are separately driven by a first driving signal and a second driving signal.

22. The method according to claim 21, wherein controlling the display operation of the non-driver-seat display area in a low-power-consumption mode comprises:
prohibiting the display operation of at least a portion of the non-driver-seat display area, or
controlling at least a portion of the non-driver-seat display area to display low-power-consumption data.

23. The method according to claim 21, comprising:
when it is determined that the front-passenger seat becomes occupied while in a state where the front-passenger seat is unoccupied, switching to control the display operation of the non-driver-seat display area in a normal mode.

24. A motor vehicle comprising the display system of claim 1.
